# EUROPEAN PATENT APPLICATION

(11) **EP 1 584 670 A1**
(43) Date of publication of application: **12.10.2005**
(21) Application number: 04700293.6
(22) Date of filing: 06.01.2004
(51) Int. Cl.: C09K 3/14, B24D 3/00

(54) **CUBIC BORON NITRIDE ABRASIVE GRAINS AND METHOD FOR PRODUCING THE SAME, AND GRINDSTONE AND POLISHING CLOTH OR PAPER USING THE SAME**

(30) Priority: 06.01.2003 JP 2003000449
(71) Applicant: Showa Denko K.K., Tokyo 105-8518 (JP)
(72) Inventor: IHARA, E., Showa Denko K.K., Shiojiri-shi, Nagano 399-6461 (JP); OTSUBO, H., Showa Denko K.K., Minato-ku, Tokyo 105-8518 (JP); SHIMIDZU, T., Showa Denko K.K., Shiojiri-shi, Nagano 399-6461 (JP)
(74) Representative: Strehl Schübel-Hopf & Partner
(86) International application number: PCT/JP2004/000013
(87) International publication number: WO 2004/061040

(57) **Abstract**

Cubic boron nitride abrasive grains which are substantially mono-crystalline and assume a black color. Such abrasive grains preferably have a specific packing ratio. Such abrasive grains are obtained by adding a boron source during synthesizing cubic boron nitride. By using such abrasive grains, a grinding wheel or a coated abrasive, which can improve surface roughness of ground workpieces while maintaining reduced grinding power, is formed.

## Description

### TECHNICAL FIELD

The present invention relates to cubic boron nitride abrasive grains used for producing a grinding wheel, etc., to a method for producing the abrasive grains, and to a grinding wheel and a coated abrasive which employ the cubic boron nitride abrasive grains.

### BACKGROUND ART

Cubic boron nitride (cBN) is second to diamond in hardness and has chemical stability higher than that of diamond. Thus, cubic boron nitride is increasingly employed as abrasive grains for producing grinding material, polishing material, or cutting material.

A variety of methods for producing cubic boron nitride have been proposed. Among them, best known and widely employed in the industrial field is a method in which hexagonal boron nitride (hBN) is maintained in the presence of a substance such as a catalyst substance under conditions where cubic boron nitride remains thermodynamically stable (approximately 4 to 6 GPa, approximately 1,400 to 1,600°C), to thereby transform hexagonal boron nitride into cubic boron nitride (see, for example, Patent Documents 1 to 3).

The cubic boron nitride abrasive grains obtained through any of these methods have high hardness and chemical stability as mentioned above, and are employed in electroplated grinding wheels, metal-bonded grinding wheels, etc.

The cubic boron nitride abrasive grains obtained through any of the aforementioned methods are almost spherical (i.e., blocky abrasive grains). Thus, these abrasive grains are not suitably employed in grinding applications in which superior grinding performance is required and vitrified bonded grinding wheel are desirably employed.

In this connection, there is disclosed that cubic boron nitride particles having a sharp shape and a comparatively dense texture are used in order to achieve superior grinding performance of a grinding wheel including cubic boron nitride abrasive grains, and to maintain superior grinding performance for prolonged periods (see, for example, Patent Document 4).

There are also disclosed abrasive grains which can increase porosity of a porous grinding wheel such as a vitrified bonded grinding wheel, thereby achieving superior grinding performance, without decreasing grinding ratio(see, for example, Patent Document 5).

By use of these abrasive grains, production of grinding wheels which operate with superior grinding performance has been achieved.
Patent Document 1: Japanese Unexamined Patent Application, First Publication No. S58-84106
Patent Document 2: Japanese Unexamined Patent Application, First Publication No. S59-57905
Patent Document 3: Japanese Unexamined Patent Application, First Publication No. S59-73410
Patent Document 4: Japanese Unexamined Patent Application, First Publication No. H09-169971
Patent Document 5: Japanese Unexamined Patent Application, First Publication No. 2003-64350

However, even when a grinding wheel employing the aforementioned abrasive grains are used, there cannot be solved the problem that the surface roughness of ground workpieces is unsatisfactory as compared with the surface roughness obtained by use of a grinding wheel employing conventional abrasive grains. The reason is presumably that, during truing, dressing, or grinding, the aforementioned abrasive grains are coarsely broken because of a sharp grain shape or a low packing ratio, thereby reducing the number of effective cutting edges during performance of grinding.

In association with the trend for scale reduction and precision enhancement of workpieces in the field of grinding processes, there is increasing demand for a grinding wheel which can improve surface roughness of ground workpieces while maintaining superior grinding performance. Thus, development of abrasive grains which can produce such a grinding wheel is envisaged.

### DISCLOSURE OF INVENTION

The present inventors have conducted extensive studies in order to solve the aforementioned problems, and have found that abrasive grains become finely breakable when a boron source is added to a starting material for synthesizing the abrasive grains. As a result, even when abrasive grains having a sharp grain shape or a low packing ratio are used, coarse breaking (coarse chipping) of the abrasive grains during truing, dressing, or grinding can be prevented, thereby attaining production of a grinding wheel which can improve surface roughness of ground workpieces while maintaining reduced grinding power.

Accordingly, the present invention provides:
(1) cubic boron nitride abrasive grains which are substantially mono-crystalline and assume a black color;
(2) cubic boron nitride abrasive grains as described in (1), wherein the abrasive grains have a packing ratio calculated by dividing a bulk density thereof by the true density of cubic boron nitride (3.48 g/cm³) falling within a range of:
   0.536 to 0.282 when the abrasive grains belong to a JIS B 4130: 1998 grit size fraction of 40/50;
   0.534 to 0.280 when the abrasive grains belong to a grit size fraction of 50/60;
   0.532 to 0.278 when the abrasive grains belong to a grit size fraction of 60/80;
   0.526 to 0.274 when the abrasive grains belong to a grit size fraction of 80/100;
   0.520 to 0.269 when the abrasive grains belong to a grit size fraction of 100/120;
   0.511 to 0.264 when the abrasive grains belong to a grit size fraction of 120/140;
   0.506 to 0.259 when the abrasive grains belong to a grit size fraction of 140/170;
   0.500 to 0.253 when the abrasive grains belong to a grit size fraction of 170/200;
   0.497 to 0.246 when the abrasive grains belong to a grit size fraction of 200/230;
   0.491 to 0.240 when the abrasive grains belong to a grit size fraction of 230/270;
   0.486 to 0.233 when the abrasive grains belong to a grit size fraction of 270/325; and
   0.480 to 0.226 when the abrasive grains belong to a grit size fraction of 325/400;
(3) a method for producing cubic boron nitride abrasive grains which are substantially mono-crystalline and assume a black color, including a step of maintaining a starting material mixture containing a boron source and hexagonal boron nitride under pressure and temperature conditions where cubic boron nitride remains thermodynamically stable;
(4) a method for producing cubic boron nitride abrasive grains as described in (3), wherein the boron source is at least one species selected from boron and boron carbide;
(5) a method for producing cubic boron nitride abrasive grains as described in (3) or (4), wherein the starting material mixture contains cubic boron nitride twins as seed crystals;
(6) a method for producing cubic boron nitride abrasive grains as described in any one of (3) to (5), wherein the starting material mixture contains LiMBN₂ (M represents Ca, Ba, or Mg) serving as a catalyst substance;
(7) a method for producing cubic boron nitride abrasive grains as described in (6), wherein the LiMBN₂ serving as the catalyst substance is LiCaBN₂;
(8) a method for producing cubic boron nitride abrasive grains as described in any one of (3) to (7), wherein the starting material mixture contains LiMBN₂ (M represents Ca, Ba, or Mg) serving as a catalyst substance and at least one species selected from the group consisting of an alkali metal, an alkaline earth metal, an alkali metal nitride, an alkali metal boronitride, an alkaline earth metal nitride, and an alkaline earth metal boronitride;
(9) a method for producing cubic boron nitride abrasive grains, characterized by including crushing cubic boron nitride abrasive grains produced through a method for producing cubic boron nitride abrasive grains as recited in (3) to (8) above;
(10) a method for producing cubic boron nitride abrasive grains as described in (9), wherein the step of crushing is performed by means of a roll crusher;
(11) a method for producing cubic boron nitride abrasive grains, including a step of removing particles having an L/T ratio of 1.5 or less from cubic boron nitride abrasive grains produced through a method as recited in (3) to (10) above, where L represents a major diameter (µm) and T represents a thickness (µm) defined in a three-axis system;
(12) cubic boron nitride abrasive grains which are produced through a method for producing cubic boron nitride abrasive grains as recited in any one of (3) to (11) above;
(13) a grinding wheel which is produced by bonding cubic boron nitride abrasive grains as recited in any one of (1), (2), and (12) above by use of a bond;
(14) a grinding wheel as described in (13), wherein the bond is a vitrified bond;
(15) a grinding wheel as described in (14), wherein the vitrified bond is incorporated into the grinding wheel in an amount falling within a range of 10 to 50% by volume; and
(16) a coated abrasive produced by fixing cubic boron nitride abrasive grains as recited in any one of (1), (2), and (12) above on cotton cloth or a similar cloth or paper substrate by use of an adhesive.

### BRIEF DESCRIPTION OF THE DRAWINGS

FIG. 1 is a schematic sketch of morphology of a twin of cubic boron nitride, in which the arrows indicate directions of preferential growth.
FIG. 2 is a schematic sketch of morphology of a layered twin of cubic boron nitride, in which the arrows indicate directions of preferential growth.

### BEST MODE FOR CARRYING OUT THE INVENTION

The cubic boron nitride abrasive grains of the present invention are characterized in that the abrasive grains are substantially mono-crystalline and assume a black color.

The cubic boron nitride abrasive grains of the present invention are substantially mono-crystalline and assume a black color, wherein the abrasive grains have a packing ratio calculated by dividing a bulk density (unit: g/cm³) thereof by the true density of cubic boron nitride (3.48 g/cm³) falling within a range of:
0.536 to 0.282 when the abrasive grains belong to a JIS B 4130: 1998 "Diamond/CBN products - Grain sizes of diamond or cubic boron nitride" grit size fraction of 40/50;
0.534 to 0.280 when the abrasive grains belong to a grit size fraction of 50/60;
0.532 to 0.278 when the abrasive grains belong to a grit size fraction of 60/80;
0.526 to 0.274 when the abrasive grains belong to a grit size fraction of 80/100;
0.520 to 0.269 when the abrasive grains belong to a grit size fraction of 100/120;
0.511 to 0.264 when the abrasive grains belong to a grit size fraction of 120/140;
0.506 to 0.259 when the abrasive grains belong to a grit size fraction of 140/170;
0.500 to 0.253 when the abrasive grains belong to a grit size fraction of 170/200;
0.497 to 0.246 when the abrasive grains belong to a grit size fraction of 200/230;
0.491 to 0.240 when the abrasive grains belong to a grit size fraction of 230/270;
0.486 to 0.233 when the abrasive grains belong to a grit size fraction of 270/325; and
0.480 to 0.226 when the abrasive grains belong to a grit size fraction of 325/400. When the packing ratio of the abrasive grains exceeds the above-described ranges, grinding performance is degraded, and grinding power required during grinding is increased. In contrast, when the packing ratio of the abrasive grains is below the above-described ranges, chipping off of the abrasive grains is increased, and the grinding ratio is decreased.

There are known cubic boron nitride abrasive grains having a packing ratio approximately falling within the above ranges (see, for example, Patent Document 4 above). However, among such cubic boron nitride abrasive grains, those being substantially mono-crystalline and assuming a black color have not yet been known. The present inventors have studied the synthesis of cubic boron nitride abrasive grains and, as a result, have attained synthesis of cubic boron nitride abrasive grains which are substantially mono-crystalline, assume a black color, and have a property of breaking finely so as to attain a packing ratio falling within the aforementioned ranges, by adding a boron source to a starting material for the synthesis.

Among the cubic boron nitride abrasive grains, those being substantially mono-crystalline are suited for abrasive grains for grinding. Although the cubic boron nitride abrasive grains contain, in addition to mono-crystals thereof, cubic boron nitride abrasive grains such as polycrystalline grains and microcrystalline grains, mono-crystals are preferably used in the present invention. Polycrystalline or microcrystalline cubic boron nitride abrasive grains have comparatively high grain strength and are resistant to chipping. When such abrasive grains are employed in a grinding wheel, cutting edges of the abrasive grains tend to undergo abrasion and wear, thereby increasing grinding power. Thus, polycrystalline or microcrystalline abrasive grains are not suitable as cubic boron nitride abrasive grains of the present invention. In the present invention, the concept "abrasive grains substantially mono-crystalline" excludes polycrystalline abrasive grains and microcrystalline abrasive grains.

In the present invention, when cubic boron nitride abrasive grains are referred to as "substantially mono-crystalline," it means that the cubic boron nitride abrasive grains contain the aforementioned mono-crystalline abrasive grains in amounts of 90% by volume or more based on the entirety of the cubic boron nitride abrasive grains, preferably 95% by volume or more, more preferably 99% by volume or more. The above-specified percentage is based solely on cubic boron nitride and does not take into account other impurities.

As disclosed in Japanese Unexamined Patent Application, First Publication No. S59-199513, cubic boron nitride abrasive grains can be produced at high yield by use of a reaction system including hexagonal boron nitride, a catalyst substance, and a Group IIIb element in combination. The thus-produced cubic boron nitride abrasive grains are known to have high quality; i.e., excellent mechanical strength without undesired variation of shape.

The research carried out by the present inventors has revealed that cubic boron nitride abrasive grains produced from a synthesis starting material to which a boron source has been added can be finely broken as compared with the starting material containing no boron source. When abrasive grains are finely broken, surface roughness of workpieces can be improved. The effect is identified only when a boron source is added to the starting material, and addition of another Group IIIb element or a compound thereof does not attain such an effect. Presumably, the effect of the boron source and that of another Group IIIb element or a compound thereof may differ from one another.

At present, the effect of addition of a boron source on enhancing the breaking property has not been completely elucidated. However, based on the black color assumed by the cubic boron nitride abrasive grains formed through the process involving addition of a boron source, it may be considered that the added boron source is incorporated in the abrasive grains to form an inclusion compound or that an increase in boron content of the synthesis starting material generates crystal faults as a result of excessive boron atoms or deficient nitrogen atoms in the crystal lattice of the abrasive grains. Such a phenomenon is presumably related to enhancement of breaking property to some extent.

The packing ratio of the cubic boron nitride abrasive grains of the present invention is obtained by dividing a bulk density (unit: g/cm³) thereof by the true density of cubic boron nitride (3.48 g/cm³). The bulk density is measured through a method in accordance with "Testing method for Bulk density of artificial abrasives" specified in JIS R 6126: 2002.

The general procedure of the measurement method will next be described specifically. The outlet of a funnel is plugged with a stopper, and a sample to be measured is placed in the funnel in an amount of 20.0 ± 0.1 g. A cylinder (capacity: 8.0 ± 0.1 ml) is placed just under the outlet of the funnel, and the fall distance from the outlet of the funnel to the top of the cylinder is adjusted to 95.0 ± 1.0 mm. When the stopper is removed, the entirety of the sample falls into the cylinder. The portion of the sample protuberant from the top of the cylinder is removed by means of a metal plate, and the sample remaining in the cylinder is subjected to mass measurement. The measured mass is divided by the cylinder capacity, to thereby obtain the bulk density of the sample.

The above is a brief description of measurement of the bulk density. In order to measure the bulk density more accurately, prior to measurement the abrasive grains must be washed by use of diluted hydrochloric acid or aqua regia, then subjected to removal of acid therefrom, and dried, so as to avoid influence attributed to matter such as deposits or stain on the abrasive grains.

The cubic boron nitride abrasive grains of the present invention have a packing ratio falling within the aforementioned range when the abrasive grains belong to a specific JIS B 4130: 1998 grit size fraction. The abrasive grains belonging to different grit size fractions may be blended.

Abrasive grains having a packing ratio falling within the aforementioned ranges advantageously reduce grinding power for operating a grinding wheel. However, when the packing ratio falling outside the aforementioned ranges, the grinding power required during grinding increases, or chipping off of the abrasive grains is increased, and the grinding ratio is decreased.

No particular limitation is imposed on the method of producing abrasive grains formed of cubic boron nitride that are employed in the present invention. However, in consideration of productivity, hexagonal boron nitride and a boron source are preferably maintained in the presence of a catalyst substance under conditions where cubic boron nitride remains thermodynamically stable, to thereby transform hexagonal boron nitride into cubic boron nitride.

Commercial hexagonal boron nitride powder may be used as a starting material. However, hexagonal boron nitride of low oxygen content is preferably used, since oxygen impurities which migrate into hexagonal boron nitride often retard transformation of hexagonal boron nitride into cubic boron nitride.

No particular limitation is imposed on the particle size of hexagonal boron nitride, but a particle size, as defined in JIS R 6001: 1998, of F150 or less is generally preferred, since excessively large particle sizes may deteriorate reactivity of hexagonal boron nitride with a catalyst substance.

No particular limitation is imposed on the catalyst employed upon transformation of hexagonal boron nitride into cubic boron nitride, and any of known catalysts can be used. Examples of the employable catalyst include alkali metals (e.g., Li), nitrides thereof (e.g., Li₃N), boronitrides thereof (e.g., Li₃BN₂), alkaline earth metals (e.g., Ca, Mg, Sr, and Ba), nitrides thereof (e.g., Ca₃N₂, Mg₃N₂, Sr₃N₂, and Ba₃N₂), boronitrides thereof (e.g., Ca₃B₂N₄, Mg₃B₂N₄, Sr₃B₂N₄, and Ba₃B₂N₄), and complex boronitrides containing an alkali metal and an alkaline earth metal (e.g., LiCaBN₂ and LiBaBN₂). No particular limitation is imposed on the particle size of the catalyst, but a particle size of F150 or less is preferred, since excessively large particle sizes may deteriorate reactivity of hexagonal boron nitride with a catalyst substance. The catalyst substance is added in an amount of preferably 5 to 50 parts by mass to 100 parts by mass of hexagonal boron nitride. To attain co-existence of a catalyst substance and hexagonal boron nitride, a powder of the catalyst substance and a powder of hexagonal boron nitride are mixed together. Alternatively, hexagonal boron nitride layers and catalyst substance layers may be placed in a reactor such that these layers are alternately stacked.

No particular limitation is imposed on the type of the boron source, and elemental boron and a boron compound can be used. Although no particular limitation is imposed on the particle size of the boron source, a particle size of F150 or less is preferred. This is because when the particle size is excessively large, uniformity in shape of the formed abrasive grains may fail to attain due to localization of the boron source in the raw material. The boron source is added in an amount of preferably 0.01 to 10 parts by mass to 100 parts by mass of hexagonal boron nitride. When the amount of boron source is less than 0.01 parts by mass, the effect of the added boron source is not fully attained, whereas when the amount is in excess of 10 parts by mass, transformation of hexagonal boron nitride to cubic boron nitride is inhibited, thereby reducing the yield thereof.

To attain co-existence of a boron source and hexagonal boron nitride, a powder of the boron source and a powder of hexagonal boron nitride are mixed together. Similarly, to attain co-existence of a boron source and a catalyst substance, a powder of the boron source and a powder of the catalyst substance are mixed together. Alternatively, the boron source may be heated to react with the catalyst substance in advance. Needless to say, a powder of hexagonal boron nitride, a powder of the catalyst substance, and a powder of the boron source can be mixed so as to attain co-existence of the components.

Specifically, in a preferred mode, hexagonal boron nitride, a catalyst substance, and a boron source are mixed, and the mixture is shaped at about 1 to about 2 tons/cm². Alternatively, hexagonal boron nitride and the catalyst substance are individually shaped at about 1 to about 2 tons/cm². In both cases, the resultant compact is charged into a reactor. In the case in which hexagonal boron nitride and the catalyst substance are individually shaped, the boron source is preferably mixed in advance with hexagonal boron nitride or the catalyst substance. Through employment of any of the methods, manageability of raw material powders is improved and shrinkage of the raw material occurring in the reactor decreases, thereby enhancing productivity of cubic boron nitride abrasive grains.

In another mode of the present invention, cubic boron nitride seed crystals are added in advance to the aforementioned compact or stacked product, to thereby promote growth of cubic boron nitride from the seed crystals serving as crystallization nuclei. In this case, the seed crystals may be coated with the catalyst substance.

The aforementioned compact or similar material containing a catalyst substance, hexagonal boron nitride, and another substance is charged into a reactor, and the reactor is placed in a known high-temperature/high-pressure-generator, where the compact is maintained under temperature/pressure conditions where cubic boron nitride remains thermodynamically stable. The thermodynamically stable conditions are described by O. Fukunaga in Diamond Relat. Mater., 9, (2000), 7-12 and generally fall within ranges of about 4 to about 6 GPa and about 1,400 to about 1,600°C. The compact is typically maintained for about 1 second to about 6 hours.

By maintaining the compact under the aforementioned conditions where cubic boron nitride remains thermodynamically stable, hexagonal boron nitride is transformed into cubic boron nitride. In general, a synthesis ingot containing hexagonal boron nitride, cubic boron nitride, a boron source, and a catalyst substance is yielded. The thus-yielded synthesis ingot is crushed for isolating and purifying cubic boron nitride.

A method for isolation and purification described in Japanese Unexamined Patent Application, First Publication No. S49-27757 may be employed. According to the method, the yielded synthesis ingot is crushed into granules of a size of 5 mm or less, and sodium hydroxide and a small amount of water are added to the granules. The mixture is heated at about 300°C, to thereby selectively dissolve hexagonal boron nitride. The mixture is cooled, and undissolved matter is washed sequentially with acid and water and separated through filtration, to thereby yield cubic boron nitride abrasive grains.

Among the thus-yielded cubic boron nitride abrasive grains, those useful in the present invention are substantially mono-crystalline abrasive grains. Whether or not the cubic boron nitride abrasive grains are mono-crystalline can be determined through, for example, X-ray diffraction.

The cubic boron nitride abrasive grains which are substantially mono-crystalline and which have been obtained through the above method are classified to grit size fractions defined in JIS B 4130: 1998. From each fraction, blocky abrasive grains are removed by use of a shape selector or a similar device, to thereby yield cubic boron nitride abrasive grains having a packing ratio falling within the scope of the present invention.

The term "blocky abrasive grains" refers to crystal particles of generally spherical shape, more specifically, those having an L/T ratio of approximately 1, wherein L represents a major diameter (µm) and T represents a thickness (µm) defined in a three-axis system of a crystal particle. The three-axis system described herein is employed to quantify the shape of particles having an irregular shape by converting the irregular shape to corresponding rectangular parallelpiped, and is recited on page 1 of *Funtai Kogaku Binran* (first edition, first printing (1986), edited by The Society of Powder Technology, Japan).

Briefly, two parallel lines are provided so as to sandwich the projection view of a particle placed on an arbitrary plane under a static condition. When the lines are in contact with the projection view, the distance between the two lines is measured. The longest distance serves as the major diameter L (µm) of the particle, and the distance between two other lines in contact with the particle in a direction normal to the line along the longest distance serves as the minor diameter B (µm) of the particle. The height from the plane on which the particle is placed under a static condition to the top of the particle serves as the thickness T (µm). In the present invention, the thickness T (µm) of the three-axis system is the smaller value selected from the minor diameter B (µm) of a grain and the thickness T (µm) of the grain.

According to the present invention, cubic boron nitride abrasive grains having a packing ratio falling within the scope of the invention can be obtained by decreasing the percentage of abrasive grains having an L/T ratio of 1.5 or less by means of a shape selector or a similar device. The step of "removing cubic boron nitride particles having an L/T ratio of 1.5 or less" in the production method of the present invention refers to a step of "decreasing the percentage of cubic boron nitride abrasive grains having an L/T ratio of 1.5 or less."

Any device can be employed as the shape selector, so long as the device attains the aforementioned purpose. Specifically, a method in which abrasive grains having a low L/T ratio are removed through vibration may be employed.

Among grit size fractions defined in JIS B 4130: 1998 "Diamond/CBN products - Grain sizes of diamond or cubic boron nitride", those relevant to the present invention are summarized in Table 1. The particle size distribution in Table 1 was obtained by use of an electroform sieve.

**Table 1**

| Grit size fraction | 1st sieve | 2nd sieve | | 3rd sieve | | | 4th sieve |
|---|---|---|---|---|---|---|---|
| | A | B | | C | | D | E |
| | µm | µm | % | µm | % | % | µm |
| 40/50 | 600 | 455 | 8 | 302 | 90 | 8 | 213 |
| 50/60 | 455 | 322 | 8 | 255 | 90 | 8 | 181 |
| 60/80 | 384 | 271 | 8 | 181 | 90 | 8 | 127 |
| 80/100 | 271 | 197 | 10 | 151 | 87 | 10 | 107 |
| 100/120 | 227 | 165 | 10 | 127 | 87 | 10 | 90 |
| 120/140 | 197 | 139 | 10 | 107 | 87 | 10 | 75 |
| 140/170 | 165 | 116 | 11 | 90 | 85 | 11 | 65 |
| 170/200 | 139 | 97 | 11 | 75 | 85 | 11 | 57 |
| 200/230 | 116 | 85 | 11 | 65 | 85 | 11 | 49 |
| 230/270 | 97 | 75 | 11 | 57 | 85 | 11 | 41 |
| 270/325 | 85 | 65 | 15 | 49 | 80 | 15 | - |
| 325/400 | 75 | 57 | 15 | 41 | 80 | 15 | - |

| | | | | | | | |
|---|---|---|---|---|---|---|---|
| A: Sieve through which 99.9% particles must pass | | | | | | | |
| B: Sieve on which particles must not remain in predetermined amounts or more, and the amounts | | | | | | | |
| C: Sieve on which particles must remain in predetermined amounts, and the amounts | | | | | | | |
| D: Maximum amounts of particles which may pass through the sieve | | | | | | | |
| E: Sieve through which at least 2% of particles must fail to pass | | | | | | | |

In order to enhance the yield of cubic boron nitride abrasive grains having a packing ratio falling within the scope of the present invention, the step of producing cubic boron nitride abrasive grains preferably includes a step of crushing cubic boron nitride abrasive grains. Specifically, a crushing method in which cubic boron nitride abrasive grains are broken by a pressure load is preferred. More specifically, crushing by means of a roll crusher is preferred.

In the crushing method by means of a roll crusher, abrasive grains are pressed and crushed between two rolls. The method is based on crushing by applying compressive and shear stress to abrasive grains, and the abrasive grains can be crushed by comparatively strong force applied over a short period of time. Thus, the abrasive grains are not generally over-crushed beyond requirement and are not generally formed into blocky abrasive grains having a rounded shape, to thereby enhance the yield of cubic boron nitride abrasive grains having a packing ratio falling within the scope of the present invention.

As an alternative method for producing cubic boron nitride abrasive grains having a packing ratio falling within the scope of the present invention, a method in which hexagonal boron nitride is maintained in the presence of a catalyst substance under ultra-high pressure/temperature conditions, to thereby transform hexagonal boron nitride into cubic boron nitride, directly yielding abrasive grains having a packing ratio falling within the scope of the present invention, may also be employed (see Patent Document 5). More specifically, in the method for producing cubic boron nitride abrasive grains, which method includes maintaining a mixture containing hexagonal boron nitride and seed crystals of cubic boron nitride under pressure/temperature conditions where cubic boron nitride remains thermodynamically stable, twins or layered twins are used as seed crystals of cubic boron nitride, to thereby yield cubic boron nitride abrasive grains having a packing ratio falling within the scope of the present invention.

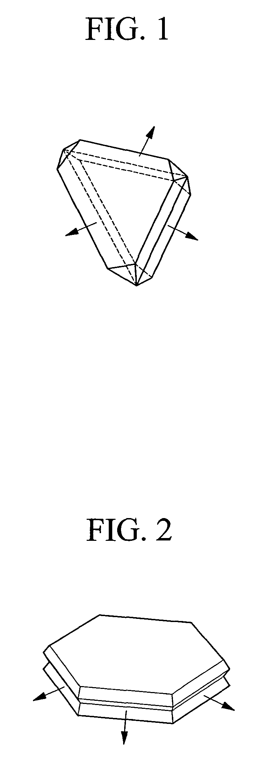

The term "twin" refers to a crystal having two portions which are mutually symmetrical. FIGS. 1 and 2 show schematic views of the crystal morphology of one specific twin.

For example, in a twin shown in FIG. 1, crystal growth occurs preferentially in three directions represented by the arrows. When layered twins having two or more twinning planes as shown in FIG. 2 are used as seed crystals, the number of planes having a concave portion increases. Thus, cubic boron nitride abrasive grains having a packing ratio falling within the scope of the present invention are more readily grown as compared with the case in which seed crystals as shown in FIG. 1 are used.

The reason for yielding cubic boron nitride abrasive grains having a packing ratio falling within the scope of the present invention by use of twins as seed crystals is considered as follows. At concave portions of a twin, generation of crystal nuclei occurs one-dimensionally; i.e., in specific crystal orientations. Accordingly, crystal growth in these directions occurs at a remarkably different rate as compared with other crystal orientations, and anisotropic growth of crystal grains increases. Thus, irregular-shape abrasive grains tend to grow, leading to easy production of cubic boron nitride abrasive grains having a packing ratio falling within the scope of the present invention.

When a grinding wheel is produced by use of the cubic boron nitride abrasive grains of the present invention, an improved surface roughness of workpieces and reduced grinding power can be attained. Particularly, the effect is remarkably exerted in the case of a porous vitrified bonded grinding wheel. Furthermore, addition of a boron source to a synthesis raw material provides an additional effect on improvement of interaction (wettability) between the vitrified bond and the cubic boron nitride abrasive grains of the present invention. Thus, abrasive grains are more strongly held in the grinding wheel, thereby increasing the grinding ratio.

For producing vitrified bonded grinding wheels, any bond which is typically employed for binding cubic boron nitride abrasive grains can be used in accordance with the purpose of use. Examples of such bond include bonds predominantly containing SiO₂-Al₂O₃. The amount of the bond incorporated in a grinding wheel preferably falls within a range of 10 to 50% by volume. When the amount is less than 10% by volume, retention of the particles decreases and the number of falling particles increases, resulting in a decreased grinding ratio not suitable for a grinding tool. When the amount is in excess of 50% by volume, the porosity of a grinding wheel decreases, requiring increased grinding power, and increase in volume (foaming) tends to occur during firing for producing a grinding wheel, these effects being disadvantageous.

Additives (e.g., aggregates and bonding aids) or similar substances which are typically used for producing a grinding wheel employing cubic boron nitride abrasive grains may also be used.

The cubic boron nitride abrasive grains of the present invention are suitably employed in grinding wheels produced by use of other types of bond, a coated abrasive, etc. as well as in the aforementioned vitrified bonded grinding wheels. The term "coated abrasive" refers to a grinding material containing abrasive grains fixed by use of an adhesive on cloth. Specifically, the grinding cloth is produced by fixing abrasive grains on cotton cloth or similar cloth by use of an adhesive such as glue, gelatin, or synthetic resin.

### Examples

The present invention will next be described by way of examples, which should not be construed as limiting the invention thereto.

### (Example 1)

LiCaBN₂ (15 parts by mass) serving as a cBN synthesis catalyst and amorphous boron (1.5 parts by mass) serving as a boron source were added to hBN (UHP-1™, product of Showa Denko K. K.; mean particle size: 8 to 10 µm; purity: 98%) (100 parts by mass), to thereby yield a starting mixture. The starting mixture was molded at a molding density of 1.92 g/cm³, to thereby yield a compact. The compact was charged into a reactor, and the reactor was placed in a high-temperature/high-pressure-generator, where synthesis was carried out at 5 GPa and 1,500°C for 15 minutes. After completion of synthesis, the yielded synthesis ingot was removed from the reactor and crushed into granules of a size of 5 mm or less, and sodium hydroxide and a small amount of water were added to the granules. The mixture was heated at about 300°C, to thereby selectively dissolve hexagonal boron nitride. The mixture was cooled, and undissolved matter was washed sequentially with acid and water and separated through filtration for purification, to thereby yield transparent, cubic boron nitride abrasive grains.

The thus-obtained cubic boron nitride abrasive grains assumed a black color and was found to contain mono-crystalline abrasive grains in an amount of 99% or more.

### (Example 2)

The procedure of Example 1 was repeated, except that cubic boron nitride abrasive grains (0.5 parts by mass) containing large amounts of twins (mean particle size: 30 µm) as shown in FIG. 1 and serving as seed crystals were further added to the starting mixture, thereby yield a mixture, synthesize cubic boron nitride abrasive grains, and isolate and purify the abrasive grains.

The thus-obtained cubic boron nitride abrasive grains assumed a black color and was found to contain mono-crystalline abrasive grains in an amount of 99% or more.

### (Example 3)

The cubic boron nitride abrasive grains obtained in Example 1 were classified to grit size fractions defined in JIS B 4130: 1998. From the abrasive grains belonging to the 120/140 grit size fraction, blocky abrasive grains were removed by use of the aforementioned shape selector.

The shape selector employing a vibration plate in the form of a regular triangle with each side having a length of approximately 1 m was used. The vibration plate (apexes A, B, and C) was inclined at 18° such that the apex B was positioned upward with respect to the side AC serving as an inclination axis. The vibration plate was further inclined at 5° such that the apex A declines to the apex C.

The percentage of abrasive grains having an L/T ratio of 1.5 or less contained in the cubic boron nitride abrasive grains was reduced by use of the shape selector. Subsequently, the thus-treated cubic boron nitride abrasive grains were washed with diluted hydrochloric acid, subjected to removal of acid therefrom, and dried. Then, the bulk density of the dried particles was measured, to thereby derive the packing ratio thereof.

The bulk density was measured in the following manner. The outlet of a funnel was plugged with a stopper, and cubic boron nitride abrasive grains to be measured were placed in the funnel in an amount of 20.0 g. A cylinder (capacity: 8.0 ml) was placed just under the outlet of the funnel, and the fall distance from the outlet of the funnel to the top of the cylinder was adjusted to 95.0 mm. When the stopper was removed, the entirety of the cubic boron nitride abrasive grains was caused to fall into the cylinder. The portion of the cubic boron nitride abrasive grains protuberant from the top of the cylinder was removed by means of a metal plate, and the cubic boron nitride abrasive grains remaining in the cylinder was subjected to mass measurement. The measured mass was divided by the volume of the cylinder, to thereby obtain the bulk density.

The packing ratio of the abrasive grains belonging to the 120/140 grit size fraction is shown in Table 2.

**Table 2**

| | Type of cubic boron nitride abrasive grains used | Packing ratio of abrasive grains belonging to 120/140 grit size fraction |
|---|---|---|
| Example 3 | Example 1 | 0.503 |
| Example 4 | Example 1 | 0.497 |
| Example 5 | Example 2 | 0.500 |
| Comp. Ex. 3 | Comp. Ex. 1 | 0.498 |
| Comp. Ex. 4 | Comp. Ex. 1 | 0.501 |
| Comp. Ex. 5 | Comp. Ex. 2 | 0.502 |

### (Example 4)

The cubic boron nitride abrasive grains obtained in Example 1 were crushed by means of a roll crusher.

A roll crusher (product of Yoshida Seisaku-sho) was used. Each of the rolls employed in the roll crusher has a diameter of 140 mm and a length of 140 mm and is made of hardened steel. While a load of 50 kgf (490 N) was applied to the rolls, cubic boron nitride abrasive grains were fed at 20 g/minute to the rolls rotating at 100 rpm, to thereby crush the abrasive grains.

The thus-crushed cubic boron nitride abrasive grains were classified to grit size fractions defined in JIS B 4130: 1998. The abrasive grains belonging to the 120/140 grit size fraction were washed with diluted hydrochloric acid, subjected to removal of acid therefrom, and dried. In a manner similar to that of Example 3, the bulk density of the dried particles was measured, to thereby derive the packing ratio thereof.

The packing ratio of the abrasive grains belonging to the 120/140 grit size fraction is shown in Table 2.

### (Example 5)

The cubic boron nitride abrasive grains obtained in Example 2 were classified to grit size fractions defined in JIS B 4130: 1998. The abrasive grains belonging to the 120/140 grit size fraction were washed with diluted hydrochloric acid, subjected to removal of acid therefrom, and dried. In a manner similar to that of Example 3, the bulk density of the dried particles was measured, to thereby derive the packing ratio thereof.

The packing ratio of the abrasive grains belonging to the 120/140 grit size fraction is shown in Table 2.

### (Comparative Example 1)

The procedure of Example 1 was repeated, except that LiCaBN₂ (15 parts by mass) serving as a cBN synthesis catalyst was added to hBN (UHP-1™, product of Showa Denko K. K.; mean particle size: 8 to 10 µm; purity: 98%) (100 parts by mass), to thereby yield a starting mixture, synthesize cubic boron nitride abrasive grains, and isolate and purify the abrasive grains.

The thus-obtained cubic boron nitride abrasive grains assumed a yellow color and was found to contain mono-crystalline abrasive grains in an amount of 99% or more.

### (Comparative Example 2)

Cubic boron nitride abrasive grains (0.5 parts by mass) containing large amounts of twins (mean particle size: 30 µm) as shown in FIG. 1 and serving as seed crystals were further added to the starting mixture of Comparative Example 1. The thus-produced mixture was subjected to the procedure of Example 1, to thereby yield a mixture, synthesize cubic boron nitride abrasive grains, and isolate and purify the abrasive grains.

The thus-obtained cubic boron nitride abrasive grains assumed a yellow color and was found to contain mono-crystalline abrasive grains in an amount of 99% or more.

### (Comparative Example 3)

The cubic boron nitride abrasive grains obtained in Comparative Example 1 were classified to grit size fractions defined in JIS B 4130: 1998. In a manner similar to that employed in Example 3, blocky abrasive grains were removed from the abrasive grains belonging to the 120/140 grit size fraction by use of the aforementioned shape selector.

The thus-obtained cubic boron nitride abrasive grains were washed with diluted hydrochloric acid, subjected to removal of acid therefrom, and dried. In a manner similar to that employed in Example 3, the bulk density of the dried particles was measured, to thereby derive the packing ratio thereof.

The packing ratio of the abrasive grains belonging to the 120/140 grit size fraction is shown in Table 2.

### (Comparative Example 4)

In a manner similar to that employed in Example 4, the cubic boron nitride abrasive grains obtained in Comparative Example 1 were crushed by means of a roll crusher.

The thus-crushed cubic boron nitride abrasive grains were classified to grit size fractions defined in JIS B 4130: 1998. The abrasive grains belonging to the 120/140 grit size fraction were washed with diluted hydrochloric acid, subjected to removal of acid therefrom, and dried. In a manner similar to that of Example 3, the bulk density of the dried particles was measured, to thereby derive the packing ratio thereof.

The packing ratio of the abrasive grains belonging to the 120/140 grit size fraction is shown in Table 2.

### (Comparative Example 5)

The cubic boron nitride abrasive grains obtained in Comparative Example 2 were classified to grit size fractions defined in JIS B 4130: 1998. The abrasive grains belonging to the 120/140 grit size fraction were washed with diluted hydrochloric acid, subjected to removal of acid therefrom, and dried. In a manner similar to that of Example 3, the bulk density of the dried particles was measured, to thereby derive the packing ratio thereof.

The packing ratio of the abrasive grains belonging to the 120/140 grit size fraction is shown in Table 2.

### (Example 6 and Comparative Example 6)

Each grinding wheel segment was produced by use of the abrasive grains obtained in Example 5 or those obtained in Comparative Example 5. Specifically, a mixture containing the abrasive grains, a borosilicate glass bond serving as a binding agent, and a binder (phenolic resin) was prepared; the mixture was press-formed at 150°C; and the resultant compact was fired at 1,000°C (in the atmosphere). The employed binder burnt to form pores during firing for producing a grinding wheel. The proportions of the abrasive grains, bond, and binder incorporated to form the mixture were 50% by volume, 20% by volume, and 10% by volume, respectively. The porosity of the fired product was found to be 30% by volume. The bending strength values of the thus-produced grinding wheel segments are shown in Table 3.

**Table 3**

| | Bending strength of segment (kPa) |
|---|---|
| Example 6 | 438 |
| Comparative Example 6 | 398 |

### (Example 7 and Comparative Example 7)

Each of the grinding wheel segments produced in the aforementioned Example 6 and Comparative Example 6 was bonded to an aluminum alloy substrate, to thereby form a grinding wheel, and the grinding wheel was subjected to a grinding test under the following conditions.
a. Grinding wheel; 1A1 type, 150D × 10U × 3X × 76.2H
b. Grinding machine; Horizontal-spindle surface grinding machine (grinding wheel spindle motor: 3.7 kW)
c. Workpiece; High speed tool steel (JIS SKH-51) (HRc = 62 to 64)
   Surface area of workpiece: 200 mm (length) × 100 mm (width)
d. Method of grinding; Wet surface traverse grinding
e. Grinding conditions;
   Grinding wheel peripheral speed: 1800 m/min.
   Table speed: 15 m/min.
   Cross feed rate: 5 mm/pass
   Depth of cut: 25 µm
f. Grinding fluid; exclusively for cBN (water soluble type, ×50 diluted)

Reference symbols for the shape of the grinding wheel are expressed in accordance with JIS B 4131: 1998 "Diamond/CBN products - Diamond or CBN grinding wheels", reference symbols for the workpieces are expressed in accordance with JIS B 4403 "High speed tool steel".

The grinding test results are shown in Table 4.

**Table 4**

| | Grinding ratio | Grinding power (W) | Surface roughness Ra (µm) (to grinding direction) | |
|---|---|---|---|---|
| | | | Parallel | Normal |
| Ex. 7 | 1,277 | 730 | 0.21 | 0.94 |
| Comp. Ex. 7 | 1,013 | 740 | 0.27 | 1.33 |

### INDUSTRIAL APPLICABILITY

The grinding wheel employing the cubic boron nitride abrasive grains of the present invention provides improved surface roughness of ground workpieces as compared with that of workpieces ground by a grinding wheel employing conventional abrasive grains which have been developed so as to reduce grinding power. In addition, the grinding wheel of the present invention operates with reduced grinding power of the same level as that attained by use of a grinding wheel employing the conventional abrasive grains. Thus, by use of the cubic boron nitride abrasive grains of the present invention, a grinding wheel which can improve surface roughness of ground workpieces while maintaining superior grinding performance during grinding can be produced.

Particularly, the cubic boron nitride abrasive grains of the present invention are suitably employed in a vitrified bonded grinding wheel. The vitrified bonded grinding wheel employing the cubic boron nitride abrasive grains of the present invention serves as a porous grinding wheel and exerts excellent grinding performance. In addition, the cubic boron nitride abrasive grains of the present invention can be used to produce a coated abrasive.

## Claims

1. Cubic boron nitride abrasive grains which are substantially mono-crystalline and assume a black color.

2. Cubic boron nitride abrasive grains according to claim 1, wherein the abrasive grains have a packing ratio calculated by dividing a bulk density thereof by the true density of cubic boron nitride (3.48 g/cm³) falling within a range of:
0.536 to 0.282 when the abrasive grains belong to a JIS B 4130: 1998 grit size fraction of 40/50;
0.534 to 0.280 when the abrasive grains belong to a grit size fraction of 50/60;
0.532 to 0.278 when the abrasive grains belong to a grit size fraction of 60/80;
0.526 to 0.274 when the abrasive grains belong to a grit size fraction of 80/100;
0.520 to 0.269 when the abrasive grains belong to a grit size fraction of 100/120;
0.511 to 0.264 when the abrasive grains belong to a grit size fraction of 120/140;
0.506 to 0.259 when the abrasive grains belong to a grit size fraction of 140/170;
0.500 to 0.253 when the abrasive grains belong to a grit size fraction of 170/200;
0.497 to 0.246 when the abrasive grains belong to a grit size fraction of 200/230;
0.491 to 0.240 when the abrasive grains belong to a grit size fraction of 230/270;
0.486 to 0.233 when the abrasive grains belong to a grit size fraction of 270/325; and
0.480 to 0.226 when the abrasive grains belong to a grit size fraction of 325/400.

3. A method for producing cubic boron nitride abrasive grains which are substantially mono-crystalline and assume a black color, comprising a step of maintaining a starting material mixture containing a boron source and hexagonal boron nitride under pressure and temperature conditions where cubic boron nitride remains thermodynamically stable.

4. A method for producing cubic boron nitride abrasive grains according to claim 3, wherein the boron source is at least one species selected from boron and boron carbide.

5. A method for producing cubic boron nitride abrasive grains according to claim 3 or 4, wherein the starting material mixture contains cubic boron nitride twins as seed crystals.

6. A method for producing cubic boron nitride abrasive grains according to any one of claims 3 to 5, wherein the starting material mixture contains LiMBN₂ (M represents Ca, Ba, or Mg) serving as a catalyst substance.

7. A method for producing cubic boron nitride abrasive grains according to claim 6, wherein the LiMBN₂ serving as the catalyst substance is LiCaBN₂.

8. A method for producing cubic boron nitride abrasive grains according to any one of claims 3 to 7, wherein the starting material mixture contains LiMBN₂ (M represents Ca, Ba, or Mg) serving as a catalyst substance and at least one species selected from the group consisting of an alkali metal, an alkaline earth metal, an alkali metal nitride, an alkali metal boronitride, an alkaline earth metal nitride, and an alkaline earth metal boronitride.

9. A method for producing cubic boron nitride abrasive grains, comprising a step of crushing cubic boron nitride abrasive grains produced through a method for producing cubic boron nitride abrasive grains according to any one of claims 3 to 8.

10. A method for producing cubic boron nitride abrasive grains according to claim 9, wherein the step of crushing is performed by means of a roll crusher.

11. A method for producing cubic boron nitride abrasive grains, comprising a step of removing particles having an L/T ratio of 1.5 or less from cubic boron nitride abrasive grains produced through a method according to any one of claims 3 to 10, where L represents a major diameter (µm) and T represents a thickness (µm) defined in a three-axis system.

12. Cubic boron nitride abrasive grains which are produced through a method for producing cubic boron nitride abrasive grains according to any one of claims 3 to 11.

13. A grinding wheel which is produced by bonding cubic boron nitride abrasive grains according to any one of claims 1, 2, and 12 by use of a bond.

14. A grinding wheel according to claim 13, wherein the bond is a vitrified bond.

15. A grinding wheel according to claim 14, wherein the vitrified bond is incorporated into the grinding wheel in an amount falling within a range of 10 to 50% by volume.

16. A coated abrasive produced by fixing cubic boron nitride abrasive grains according to any one of claims 1, 2, and 12 on cotton cloth or a similar cloth or paper substrate by use of an adhesive.
